# EUROPEAN PATENT SPECIFICATION

(11) **EP 1 367 433 B1**
(45) Date of publication and mention of the grant of the patent: **28.12.2005**
(21) Application number: 03019589.5
(22) Date of filing: 08.03.2002
(51) Int. Cl.: G03B 23/12, G03B 21/16

(54) **Projector**
Projektor
Projecteur

(30) Priority: 08.03.2001 IT MO20010039
(43) Date of publication of application: 03.12.2003
(62) Divisional of application: 02717049.7
(73) Proprietor: Buroni, Paolo, 61043 Cagli (IT)
(72) Inventor: Buroni, Paolo, 61043 Cagli (IT)
(74) Representative: Leone, Mario

(56) References cited:
- CH-A- 325 527
- DE-C- 421 372
- DE-C- 892 551
- DE-U- 8 525 628
- FR-A- 2 702 853
- GB-A- 588 932
- US-A- 3 632 192
- US-A- 3 712 725

## Description

The present invention refers to a projector, in particular of the type apt to project images, slides and films onto large-sized surfaces, and optionally in Multivision, i.e. with an array of projectors synchronised thereamong.

The use of specific image projectors onto large-sized surfaces in entertainment environments, e.g. discotheques and theatres is well-known. The surfaces onto which the images are projected do not necessarily require a specific preparation, oftentimes being the common walls of the projection premises, and hence exhibiting also all the uneven spots typical of a common wall: e.g. recesses, juts, openings, doors and windows, etc.

Of late years, this specific type of projections also involves outdoor environments, like facades of monuments and palaces. The effect resulting from these projections is particularly enthralling and spectacular, capable of engendering peculiar and evocative atmospheres.

This type of projections is best used during great multimedia shows and events or for advertising purposes, involving vast spaces with monumental architectural surfaces, e.g. the facade of a castle or a cathedral, or the large surfaces inside great coliseums. Another field of use of said projections is that of scenic performances. The theatre background surfaces may constitute an exceptional screen for the projected images, requiring however projectors of ever-increasing candlepower.

In the known art, implemented projection units have been already studied to gradually ameliorate the image rendering, the candlepower and, consequently, the width of the outdoor surfaces to be used as projection screens. However, in the projectors used to date the employ of strong brilliances, i.e. of lamps characterised by an elevated candlepower and a greater concentration of the light beam, results in a disproportionate increase of the dimensions, of the weight and of the overall complexity thereof. This increase in turn causes non-negligible drawbacks.

In fact, considerable dimensions and weight, of up and beyond the 100 kg, can limit the use and the applications of such known-type projectors, which further require complex maintenance, lamp replacement and film loading interventions.

Apart from this major drawback, the known projectors are affected by further problems limiting the diffusion thereof.

In fact, the known-type projectors generally employ special and large-sized (up to 24x24 cm) films, which are hard to find on the market and to expose and develop, as few laboratories are adequately equipped therefor.

Above all, in the case of the multivision, often the use of non-standard projectors, hence hardly found on the market, is required.

Another drawback of the known-type projectors lies in a possible imperfect positioning of the film due to slippage and deviations of the rotation rate of the take-up rolls with respect thereto.

The imperfect positioning of the film is particularly serious when, due to specific requirements, a multivision with the concomitant use of a plurality of projectors is carried out. In these cases, the required overlapping and/or concomitance of the images is compromised, with the decaying or the undoing of the desired visual effects.

Another drawback in the known-type projectors lies in the difficult cooling of the film subjected to ever-increasing candlepower, with temperatures onto the film that can even exceed the 200°C.

The technical problem underlying the present invention is that of providing a projector allowing to obviate the problem of the dimensions and of the excessive weight, making simpler all the procedures related to the assembling of films inside the projector, at the same time having a light and easily transportable machine with a greater effectiveness and an effective adaptation to elevated candlepowers.

This problem is solved by a projector as defined in appended claim 1.

The main advantage of the projector according to the present invention lies in allowing an easier and fast assembly of the film inside the secondary body of the projection, at the same time providing a reliable control of the film positioning when the projector is in operation.

As it will be apparent hereinafter, preferred embodiments of the projector enable to satisfy further needs.

In particular, a first object achieved by preferred embodiments of the present invention is to implement a projector, employable in multivision, provided with high candlepower and yet being highly compact and weight-light, capable of using standard-type films, e.g. multisize 6x7 cm and 6x6 cm, or 70 mm and 24x36 ones with a simple adapter, with no need to add perforations to an unpunched film.

Other objects achieved by preferred embodiments of the present invention are to manufacture a projector having a quick and reliable system for loading the film and also to provide the former with an effective forced cooling of the latter.

A further object achieved by preferred embodiments of the present invention is to install an active frame synchronization system with a limited maximum error, e.g. of +/- 0.05 mm per 100 frames in the 6x7 cm format.

The present invention will hereinafter be described according to a preferred embodiment thereof, given by way of example and without limitative purposes, with reference to the attached drawings, wherein:
* figure 1 is a perspective view of a projector according to the invention, comprising a main body and a secondary body thereof;
* figure 2 is a perspective view of a detail associated to said secondary body; and
* figure 3 is a perspective view of said secondary body incorporating the detail of figure 2;

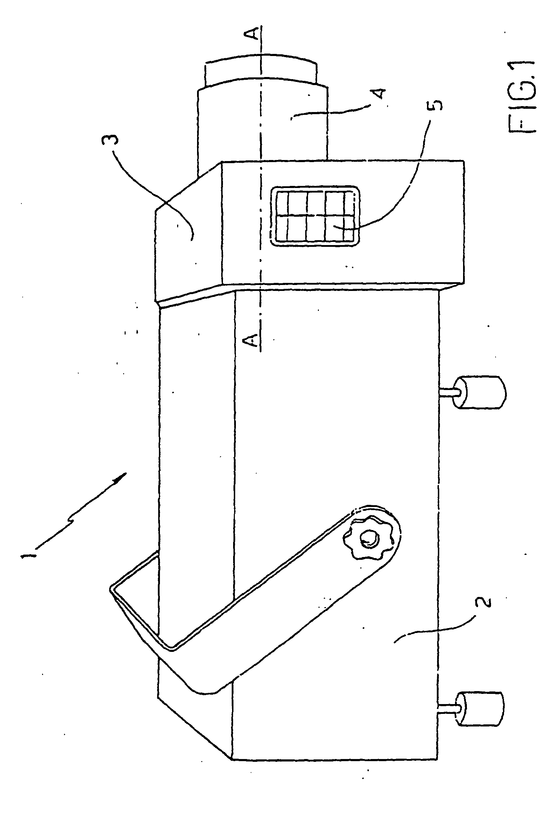

With reference to figure 1, the reference numeral 1 generally indicates a projector of the high candlepower type, i.e. destined to project onto wide surfaces, and apt to operate in multivision. The projector 1 comprises a reciprocally detachable main body 2 and a secondary body 3. In particular, the main body 2 is box-like and large sized with respect to the secondary body 3, having a substantially horizontal development with a rear end and a front end to which said secondary body 3 is detachably associated.

The main body 2 houses light generating means, i.e. lamps having the candlepower required for the projection over vast surfaces, a primary optical group which concentrates the light onto the film to be projected, and heat disposal means, i.e. suitable fans for forcedly cool the inside thereof, with appropriate vents and fins formed thereon. The body 2 will be made of a material having an elevated thermal conductivity, like anodised aluminium.

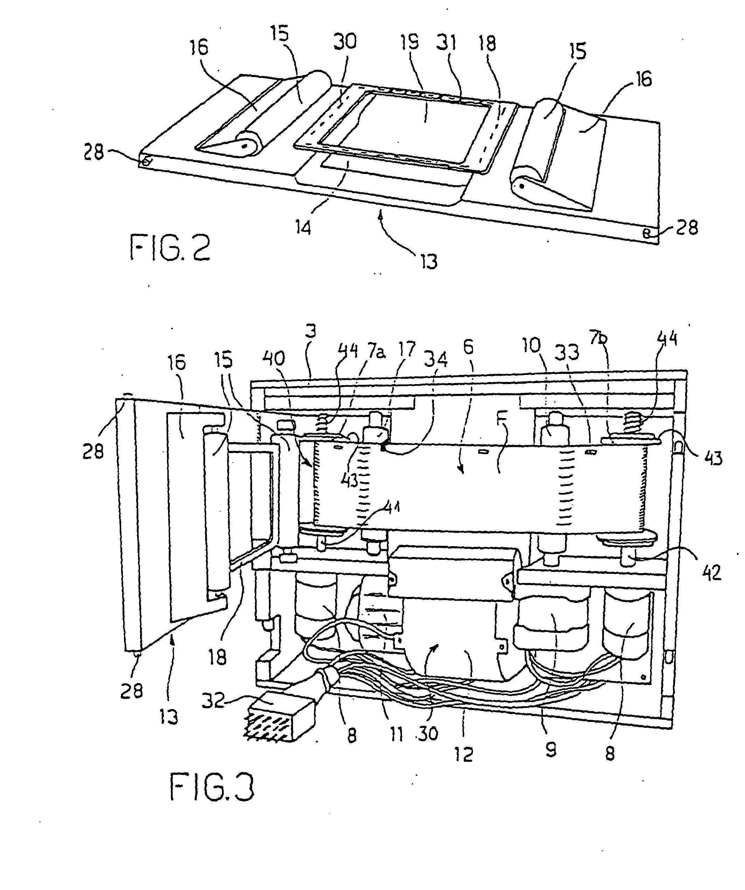

The secondary body 3 (see figure 3) can be mounted onto the main body 2 by lever couplings 28. The former substantially forms the driving device of the film to be projected and it comprises an optical projection group 4, a control button strip 5 and means, generally indicated with 40, for holding and sliding a film.

Such means 40 hold a film F stretched on a projection area 6, the primary optical group of the main body 2 and the optical projection group 4 resting thereon. At each side of this area 6, the holding and sliding means 40 comprises on the one hand a wind shaft 41, onto which a film, initially wound on a start spool 7a, is mounted, and on the other hand a rewind shaft 42, about which a take-up spool 7b gradually winds up as the projection goes on.

Each shaft 41, 42 has a length such as to house films of different sizes, and moreover comprises, at a respective end, presser members 43, each kept pressed onto the top edge of the film F by a respective spring 44. The presser members keep the film F in the projection position. Said means 40 further comprises electrical and mechanical members apt to shift the film F stretched between the two spools 7a, 7b. These members are power-supplied via a dedicated outlet 32.

Among said electrical and mechanical members there are indicated two geared motors 8, each dedicated to said two spools 7a, 7b, a first motor drive 9 apt to generate a step-by-step motion, connected to a motor roll 10 which is located adjacent to the rewind shaft 42.

The secondary body 3 further comprises means 30 for cooling the film, having a second motor drive 11 that actuates a radial-flow fan 12. In particular, the fan 12 is located at the bottom edge of the film in said projection area 6 and it generates a cooling flow tangential to both the surfaces of the film F, as well as substantially perpendicular to the path thereof.

At the back of the secondary body 3, i.e. at the portion thereof destined to contact the main body 2, there is located a first supporting plate 13. The latter, when it is completely constrained to the former, is parallel to the sliding direction of the film F and orthogonal to an axis of projection A-A.

The first plate 13 closes a rear opening 14 of the secondary body 3 centred with respect to the axis of projection A-A. It is rotatably hinged to the secondary body (3) at one of the side ends of said opening 14 (see figures). Said opening 14 has dimensions not smaller than those of the frames impressed onto the film F.

With reference to figures 2 and 3, onto the surface of the first plate 13 facing the inside of the secondary body 3, two idle rolls 15 are constrained whose axis of rotation is orthogonal to the motion plane of the film. Each of said idle rolls 15 is located in substantial correspondence to the vertical edges of the opening 14 and is constrained to a support 16, which in turn is elastically constrained to the first plate 13. Each of the two idle rolls 15, when said first plate is constrained to the secondary body 3, corresponds to and is into contact with two rolls constrained to the secondary body 3. The first roll 17 is idle as well, whereas the second roll 10 has already been defined as motor roll, connected to the first motor drive 9.

Said first roll 17 and the motor roll 10 are internal to the secondary body 3 and hence they can be defined as internal rolls 10, 17 with respect to said idle rolls 15 supported by the first pale 13 and corresponding thereto.

Onto the surface of the first supporting plate 13 facing the inside of the secondary body 3 also a frame-shaped film pressure frame 18 is elastically constrained. The latter encloses a projection opening 19 having dimensions not smaller than those of the frames impressed onto the film F. The edges of said film pressure frame 18, which face said film F when the first plate 13 is constrained to the secondary body 3, are provided with a plurality of inserts of a non-stick material, e.g., PTFE.

Moreover, the bottom edge thereof is also provided with a plurality of nicks 31 oriented as the axes of rotation of the idle rolls 15. The radial-flow fan 12 is integrally constrained to the secondary body 3 and it is positioned below the film 6 with the air flow outlet mouth substantially centred with respect to the thickness of the latter, in order to ensure the tangentiality of the cooling flow.

The first plate 13 is provided with identical fastening members 28, i.e. the said lever couplings, to the secondary body 3.

Hereinafter, the operation of the projector according to the present embodiment will be described, with particular reference to the secondary body 3.

When a projection is to be carried out, the secondary body 3 is parted from the main body 2 in order to insert the film F, and the first plate 13 is released from said secondary body making use of the fastening members 28.

Instead of completely releasing the first plate 13 from the secondary body 3, the former can even be only partially released, overturning it sideways as it is shown in Figure 3. Thus, the insertion of the film is particularly easy, taking place assembling the start spool 7a at the wind shaft 41 and hooking the free end of the film F to the rewind shaft 42.

Upon installing the film F, said first plate 13 is reapplied to the secondary body 3. Thus, the section of the former stretched onto the projection area 6 between the two spools 7a, 7b, is imprisoned between the two idle rolls 15 and the corresponding rolls 17, idle, and 10, motor.

By virtue of the elastic constraint provided to the supports 16 of the idle rolls 15, the latter always exert a steady pressure onto the corresponding rolls 17 and 10, ensuring at all times a steady pressure onto said film. To the rear surface of the film F the film pressure frame 18 adheres, by virtue of its constraint elastically yielding with respect to the first plate 13, factually concurring to keep the former perfectly planar at the axis of projection A-A. Then, the secondary body 3 can again be constrained to the main body 2 and, acting onto the control button strip 5, the film F is made to slide. Thus, the selecting of all the desired positions or frames and the storing thereof by means of the electronic management logic incorporated in the secondary body 3 of the projector 1 can be carried out. Such storing is apt to involve even more than 100 positions.

Then, the projection can be started and, at any command given by the control button strip 5 or even by a remote computer, the take-up device subject matter of the present invention will exactly position the film F onto the pre-stored spot.

In fact, the electronic management logic incorporated in the secondary body 3 will automatically provide synchronicity during the projection. Marks 33 applied onto the film F are detected by a infrared sensor 34.

Said sensor 34 is apt to operate by dimming, i.e. each mark dims the infrared beam, whereas the film F is transparent thereto. The reading by a suitable sensor (not shown) of a single mark positioned onto the film edge facing that onto which the plurality of said marks is applied provides the reference for the starting of the roll and the synchronising of the film F. Thus, the restoring of the position register after having turned off the projector, and even in the case of a blackout, is ensured.

The sole stepping motor drive 9 is the main motor drive, and it determines the shifting rate and accuracy of the film F, whereas the two geared motors 8 serve as auxiliary motor drives and control the rewinding and the unwinding of the spools 7.

An advantage provided by the structure subject-matter of the present invention lies in the certainty that the sliding of the film F is free from position deviations even at the hundredth frame. The synchronism thereby attained compensates not merely the physiological mutual film/rolls sliding, but also any sliding due to mechanical problems, wear, dust, and film aging; The active synchronisation system of the present invention positions the frames with a maximum error of +/- 0.05 mm/100 (6x7 cm) frames.

Another advantage lies in the optimal cooling of the film whose two sides are concomitantly enveloped by the air flow outletted from the fan 12 positioned quite near and bottomwise to the film, in a position substantially true to the thickness thereof. There ensues the viability of a lamp exhibiting, frame size being equal, a higher candlepower, and, hence, of the projector.

Said advantage fosters other advantages, like the greater power and useful projection size, the higher brightness of the projected image and lower risks of heat-induced film deterioration, though with an extremely compact and handy projector.

To the abovedescribed projector a person skilled in the art, in order to satisfy further and contingent needs, may effect several further modifications and variants, all however falling within the protective scope of the present invention, as defined by the appended claims.

## Claims

1. A projector (1), comprising:
* a main body (2), housing light generating means and related heat disposal means and comprising a primary optical group; and
* a secondary body (3), removably associable to said main body (2), housing means (40) for holding and sliding a film (F) comprising two internal rolls (10, 17) at the opposite ends of a projection area (6) with the film (F) extending therebetween, means (30) for cooling said film (F) and an optical projection group (4),
**characterised in that** it comprises a first plate (13) located at the back of said secondary body (3) and constrainable thereto, parallel to the slide direction of the film (6) at the projection area (6) so as to form a wall thereof facing said projection optics (4); said first plate (13) having two idle rolls (15) at the opposite ends of the projection area (6) corresponding to said internal rolls (10, 17) to keep, when the first plate is constrained to the secondary body (3), the film (F) pressed between said idle rolls (15) and said internal rolls (10, 17); said means (40) for holding and sliding comprising a motor drive (9) connected to one of said internal roll (10), the other internal roll being idle, the motor drive (9) being apt to determine the shifting rate and accuracy of the film (F).

2. The projector (1) according to claim 1, wherein said means (40) for holding and sliding a film (F) comprises a film wind shaft (41) about which a film (F) initially wound on a start spool (7a) is wound, and a film rewind shaft (42), about which a take-up spool (7b) gradually winds up as the projection goes on, each shaft (41, 42) having a length such as to house films of different sizes.

3. The projector (1) according to claim 1, wherein said shafts (41, 42) comprise, at a respective end, presser members (43), each kept pressed onto the top edge of the film (F) by a respective spring (44), the presser members keeping the film (F) in the projection position.

4. The projector (1) according to claim 1, wherein the means (30) for cooling the film (F) has a fan (12) which is located at a edge of the film (F) in a projection (6) and generates a cooling flow tangential to both the surfaces of the film (F).

5. The projector (1) according to claim 2, wherein the means (40) for holding and sliding comprises auxiliary motor drives (8) connected to said spools (7a, 7b) for the rewinding and the unwinding of the film.

6. The projector (1) according to claim 1, wherein said motor drive (9) is a step-by-step motor drive.

7. The projector (1) according to claim 1, wherein said first plate (13) closes a rear opening (14) of the secondary body (3) centred with respect to the axis of projection (A-A) and it is rotatably hinged to the secondary body (3) at one of the side ends of said opening (14).

8. The projector (1) according to claim 1, wherein said idle rolls (15) have the respective axes of rotation mutually parallel and positioned orthogonal to the sliding direction of the film (F); the idle roll (15) are constrained to the first plate (13) in a position such as to be capable of cooperating, when said first plate is constrained to the secondary body (3), with the corresponding internal roll (10, 17); the idle rolls (15) having supports (16) thereof constrained to the first plate (13) in an elastically yielding way, said elastic compliance being apt to ensure steadiness of pressure between said idle rolls (15) and the internal rolls (10, 17), said pressure being apt to ensure the normal unwinding of the film (6) between the idle rolls (15) and the internal rolls (10, 17).

9. The projector (1) according to claim 1, wherein all said rolls (15, 17, 10) are coated with a friction material.

10. The projector (1) according to claim 9, wherein the first plate (13) comprises a film pressure frame (18) between said idle rolls (15) at the projection area (6), elastically constrained to the film (F) and defining a projection opening (19) having dimensions not smaller than those of the frames impressed on the film (F).

11. The projector (1) according to claim 10, wherein the edges of the film pressure frame (18) have the surface thereof facing the inside of the secondary body (3) provided with a plurality of inserts (35) of a non-stick material.

12. The projector (1) according to claim 11, wherein the bottom edge of the film pressure frame (18) is provided with a plurality of nicks (31) oriented as the axes of rotation of the idle rolls (15); jointly to the scanty thickness of the film pressure frame (18), said nicks being apt to ease the air flow for cooling the film (6) outletted from the means for cooling (30); the reduced thickness of the film pressure frame (18) being also apt to offer the least drag to the cooling air flow.

13. The projector (1) according to claim 1, wherein the first plate (13) is provided with fastening members (28) apt to enable the mere upturning thereof with respect to the sliding plane of the film (F) as well as the complete releasing of said first plate from the secondary body (3).

## Patentansprüche

1. Projektor (1), der umfasst:
einen Hauptkörper (2), der eine Lichterzeugungseinrichtung und dazugehörige Wärmeableiteinrichtungen aufnimmt und eine primäre optische Gruppe umfasst; und
einen sekundären Körper (3), der abnehmbar mit dem Hauptkörper (2) verbunden werden kann und eine Einrichtung (40) zum Halten und Verschieben eines Films (F), die zwei innere Rollen (10, 17) an den einander gegenüberliegenden Enden eines Projektionsbereiches (6) umfasst, wobei sich der Film (F) dazwischen erstreckt, eine Einrichtung (30) zum Kühlen des Films (F) und eine optische Projektionsgruppe (4) aufnimmt,
**dadurch gekennzeichnet, dass** er eine erste Platte (13), die sich an der Rückseite des sekundären Körpers (3) befindet und daran befestigt werden kann, parallel zur Verschieberichtung des Films (6) an dem Projektionsbereich (6) umfasst, um eine Wand desselben zu bilden, die der Projektionsoptik (4) zugewandt ist, wobei die erste Platte (13) zwei Laufrollen (15) an den einander gegenüberliegenden Enden des Projektionsbereiches (6) den zwei inneren Rollen (10, 17) entsprechend hat, um den Film, wenn die erste Platte an dem sekundären Körper (3) befestigt ist, zwischen den Laufrollen (15) und den inneren Rollen (10, 17) gepresst zu halten, wobei die Einrichtung (40) zum Halten und Verschieben einen Motorantrieb (9) umfasst, der mit einer der inneren Rollen (10) verbunden ist, wobei die andere innere Rolle leer läuft und der Motorantrieb (9) sich dazu eignet, die Verschiebungsgeschwindigkeit und -genauigkeit des Films (F) zu bestimmen.

2. Projektor (1) nach Anspruch 1, wobei die Einrichtung (40) zum Halten und Verschieben eines Films (F) eine Filmaufwickelwelle (41), auf die ein Film (F), der zunächst auf eine Anfangsspule (7a) gewickelt ist, gewickelt wird, und eine Filmabwickelwelle (42) umfasst, auf die eine Aufwickelspule (7b) im Verlauf der Projektion allmählich gewickelt wird, wobei jede Welle (41, 42) so lang ist, dass sie Filme verschiedener Größe aufnimmt.

3. Projektor (1) nach Anspruch 1, wobei die Wellen (41, 42) an einem entsprechenden Ende Presselemente (43) umfassen, die jeweils durch eine entsprechende Feder (44) an den oberen Rand des Films (F) gepresst gehalten werden, und die Presselemente den Film (F) in der Projektionsposition halten.

4. Projektor (1) nach Anspruch 1, wobei die Einrichtung (30) zum Kühlen des Films (F) ein Gebläse (12) hat, das sich an einem Rand des Films (F) in einem Projektionsbereich (6) befindet und einen Kühlstrom tangential zu beiden Flächen des Films (F) erzeugt.

5. Projektor (1) nach Anspruch 2, wobei die Einrichtung (40) zum Halten und Verschieben Zusatz-Motorantriebe (8) umfasst, die mit den Spulen (7a, 7b) zum Aufwickeln und Abwickeln des Films verbunden sind.

6. Projektor (1) nach Anspruch 1, wobei der Motorantrieb (9) ein Schrittmotorantrieb ist.

7. Projektor (1) nach Anspruch 1, wobei die erste Platte (13) eine hintere Öffnung (14) des sekundären Körpers (3) verschließt, die in Bezug auf die Achse des Vorsprungs (A-A) zentriert ist, und sie an einem der seitlichen Enden der Öffnung (14) drehbar an dem sekundären Körper (3) angelenkt ist.

8. Projektor (1) nach Anspruch 1, wobei die Drehachsen der Laufrollen (15) jeweils parallel zueinander und rechtwinklig zur Verschieberichtung des Films (F) angeordnet sind, die Laufrollen (15) in einer Position an der ersten Platte (13) befestigt sind, in der sie, wenn die erste Platte an dem sekundären Körper (3) befestigt ist, mit den entsprechenden inneren Rollen (10, 17) zusammenwirken können, wobei Träger (16) der Laufrollen (15) elastisch nachgebend an der ersten Platte (13) befestigt sind und sich die elastische Nachgiebigkeit dazu eignet, konstanten Druck zwischen den Laufrollen (15) und den inneren Rollen (10, 17) zu gewährleisten, und sich der Druck dazu eignet, das normale Abwickeln des Films (6) zwischen den Laufrollen (15) und den inneren Rollen (10, 17) zu gewährleisten.

9. Projektor (1) nach Anspruch 1, wobei alle Rollen (15, 17, 10) mit einem Reibmaterial beschichtet sind.

10. Projektor (1) nach Anspruch 9, wobei die erste Platte (13) einen Filmpressrahmen (18) zwischen den Laufrollen (15) in dem Projektionsbereich (6) umfasst, der elastisch an den Film (F) gehalten wird und eine Projektionsöffnung (19) bildet, deren Abmessungen nicht kleiner sind als die der auf den Film (F) gedruckten Aufnahmen.

11. Projektor (1) nach Anspruch 10, wobei die Oberfläche der Ränder des Filmpressrahmens (18), die der Innenseite des sekundären Körpers (3) zugewandt sind, mit einer Vielzahl von Einsätzen (35) aus Antihaft-Material versehen sind.

12. Projektor (1) nach Anspruch 11, wobei der untere Rand des Filmpressrahmens (18) mit einer Vielzahl von Einschnitten (31) versehen ist, die wie die Drehachsen der Laufrollen (50) ausgerichtet sind, wobei die Einschnitte zusammen mit der geringen Dicke des Filmpressrahmens (18) sich dazu eignen, den Luftstrom zum Kühlen des Films (6), der von der Einrichtung zum Kühlen (30) ausgelassen wird, zu erleichtern, und die geringe Dicke des Filmpressrahmens (18) sich auch dazu eignet, dem Kühlluftstrom den geringsten Widerstand entgegenzusetzen.

13. Projektor (1) nach Anspruch 1, wobei die erste Platte (13) mit Befestigungselementen (28) versehen ist, die sich dazu eignen, das bloße Umdrehen derselben in Bezug auf die Verschiebeebene des Films (F) sowie das vollständige Lösen der ersten Platte von dem sekundären Körper (3) zu ermöglichen.

## Revendications

1. Projecteur (1), comportant :
* un corps principal (2), recevant des moyens pour produire de la lumière et des moyens associés pour évacuer de la chaleur et comportant un groupe optique primaire, et
* un corps secondaire (3), pouvant être associé de manière amovible audit corps principal (2), recevant des moyens (40) pour maintenir et pour faire glisser un film (F) comportant deux rouleaux intérieurs (10, 17) aux extrémités opposées d'une surface de projection (6), le film (F) s'étendant entre eux, des moyens (30) pour refroidir ledit film (F) et un groupe de projection optique (4),
**caractérisé en ce qu'**il comporte une première plaque (13) positionnée à l'arrière dudit corps secondaire (3) et pouvant être serrée sur celui-ci, parallèle au sens de glissement du film (6) sur la surface de projection (6) de manière à former une paroi de celle-ci dirigée vers ledit groupe de projection optique (4), ladite première plaque (13) ayant deux rouleaux fous (15) aux extrémités opposées de la surface de projection (6) correspondant auxdits rouleaux intérieurs (10, 17) pour maintenir, lorsque la première plaque est serrée sur le corps secondaire (3), le film (F) pressé entre lesdits rouleaux fous (15) et lesdits rouleaux intérieurs (10, 17), lesdits moyens (40) pour maintenir et pour faire glisser comportant un entraînement par moteur (9) relié à l'un desdits rouleaux intérieurs (10), l'autre rouleau intérieur étant fou, l'entraînement par moteur (9) étant adapté pour déterminer la vitesse de déplacement et la précision du film (F).

2. Projecteur (1) selon la revendication 1, dans lequel lesdits moyens (40) pour maintenir et pour faire glisser un film (F) comportent un axe d'enroulement de film (41) autour duquel un film (F) initialement enroulé sur une bobine de démarrage (7a) est enroulé, et un axe de rembobinage de film (42), autour duquel une bobine réceptrice (7b) s'enroule progressivement lorsque la projection a lieu, chaque axe (41, 42) ayant une longueur telle qu'il peut recevoir des films de différentes tailles.

3. Projecteur (1) selon la revendication 1, dans lequel lesdits axes (41, 42) comportent, à une extrémité respective, des éléments presseurs (43), chacun étant maintenu pressé sur le bord supérieur du film (F) par un ressort respectif (44), les éléments presseurs maintenant le film (F) dans la position de projection.

4. Projecteur (1) selon la revendication 1, dans lequel les moyens (30) pour refroidir le film (F) ont un ventilateur (12) qui est positionné sur un bord du film (F) dans une surface de projection (6) et qui génère un écoulement de refroidissement tangentiel aux deux surfaces du film (F).

5. Projecteur (1) selon la revendication 2, dans lequel les moyens (40) pour maintenir et pour faire glisser comportent des entraînements auxiliaires par moteur (8) reliés auxdites bobines (7a, 7b) pour le rembobinage et le débobinage du film.

6. Projecteur (1) selon la revendication 1, dans lequel ledit entraînement par moteur (9) est un entraînement par moteur pas à pas.

7. Projecteur (1) selon la revendication 1, dans lequel ladite première plaque (13) obture une ouverture arrière (14) du corps secondaire (3) centrée par rapport à l'axe de projection (A-A) et elle est articulée de manière rotative sur le corps secondaire (3) à l'une des extrémités latérales de ladite ouverture (14).

8. Projecteur (1) selon la revendication 1, dans lequel lesdits rouleaux fous (15) ont les axes de rotation respectifs mutuellement parallèles et positionnés orthogonaux au sens de glissement du film (F), les rouleaux fous (15) sont serrés sur la première plaque (13) dans une position telle qu'ils sont capables de coopérer, lorsque ladite première plaque est serrée sur le corps secondaire (3), avec le rouleau intérieur correspondant (10, 17), les rouleaux fous (15) ayant leurs supports (16) serrés sur la première plaque (13) de manière élastique, ladite souplesse élastique étant adaptée pour garantir une stabilité de pression entre lesdits rouleaux fous (15) et les rouleaux intérieurs (10, 17), ladite pression étant adaptée pour garantir le débobinage normal du film (6) entre les rouleaux fous (15) et les rouleaux intérieurs (10 , 17).

9. Projecteur (1) selon la revendication 1, dans lequel tous lesdits rouleaux (15, 17, 10) sont revêtus d'un matériau de frottement.

10. Projecteur (1) selon la revendication 9, dans lequel la première plaque (13) comporte un cadre de pression de film (18) entre lesdits rouleaux fous (15) sur la surface de projection (6), serré de manière élastique sur le film (F) et définissant une ouverture de projection (19) ayant des dimensions non inférieures à celles des cadres d'image imprimés sur le film (F).

11. Projecteur (1) selon la revendication 10, dans lequel les bords du cadre de pression de film (18) ont leur surface dirigée vers l'intérieur du corps secondaire (3) comportant une pluralité d'éléments rapportés (35) constitués d'un matériau antiadhésif.

12. Projecteur (1) selon la revendication 11, dans lequel le bord inférieur du cadre de pression de film (18) est muni d'une pluralité de crans (31) orientés comme les axes de rotation des rouleaux fous (15), conjointement à la minuscule épaisseur du cadre de pression de film (18), lesdits crans étant adaptés pour faciliter l'écoulement d'air pour refroidir le film (6) sortant des moyens pour refroidir (30), l'épaisseur réduite du cadre de pression de film (18) étant également adaptée pour offrir le minimum de résistance à l'écoulement d'air de refroidissement.

13. Projecteur (1) selon la revendication 1, dans lequel la première plaque (13) est munie d'éléments de fixation (28) adaptés pour permettre leur simple retournement par rapport au plan de glissement du film (F) ainsi que la libération complète de ladite première plaque à partir du corps secondaire (3).
